# EUROPEAN PATENT APPLICATION

(11) **EP 4 428 672 A1**
(43) Date of publication of application: **11.09.2024**
(21) Application number: 24161115.1
(22) Date of filing: 04.03.2024
(51) Int. Cl.: G06F 3/12

(54) **STORAGE MEDIUM STORING PRINTER DRIVER, INFORMATION PROCESSING APPARATUS, AND CONTROL METHOD FOR INFORMATION PROCESSING APPARATUS**

(30) Priority: 07.03.2023 JP 2023034760
(71) Applicant: CANON KABUSHIKI KAISHA, Tokyo 146-8501 (JP)
(72) Inventor: UCHIDA, Tatsuro, Tokyo (JP)
(74) Representative: WESER & Kollegen Patentanwälte PartmbB

(57) **Abstract**

PROBLEM TO BE SOLVED: To easily confirm information related to a fixed price print service before printing.

SOLUTION: A non-transitory computer-readable storage medium storing a printer driver (312) that includes a code for displaying a print setting screen (800) for receiving a print setting for printing by a printer (120) on a display unit (201) of an information processing apparatus (100) in which the printer driver is installed, and a code for displaying information related to a fixed price print service with the printer (120) on the display unit (201).

## Description

### BACKGROUND OF THE INVENTION

### Field of the Invention

The present invention relates to a storage medium storing a printer driver, an information processing apparatus, and a control method for the information processing apparatus.

### Description of the Related Art

In recent years, a fixed price print service has been widely used in which a printer can be used at a fixed price regardless of the printed sheet number during a contract period as long as the printed sheet number is within the number of print sheets corresponding to a contracted plan. In the fixed price print service, a plan including a rental service of a printer main body in addition to the print service within the number of print sheets is provided. Further, a plan including a delivery service of toner and ink as consumables is also provided (see Japanese Laid-Open Patent Publication No. 2021-70161 (JP 2021-70161 A)). When using the fixed price print service, a user does not need to purchase toner, ink, and a printer body individually, and can suppress initial cost for printing.

In a typical fixed price print service, the upper limit number of sheets that can be printed at a flat price during a contract period, such as one month or one year, is determined. If the printed sheet number exceeds the upper limit, the plan is automatically changed to a high-priced plan having a larger upper limit of print sheet number, or a relatively high charge is paid for the excessive printed sheets. Therefore, a user who uses the fixed price print service intends to prevent an unintended automatic change of a plan and an occurrence of an excessive charge by confirming the number of remaining printable sheets before printing.

However, the user needs to access a dedicated website or the like in order to confirm information related to the contract of the fixed price print service such as the number of remaining printable sheets. The access to the dedicated web site is an operation independent of the operation of instructing the execution of printing, and such an operation is troublesome for the user.

### SUMMARY OF THE INVENTION

Accordingly, a first aspect of the present invention provides a non-transitory computer-readable storage medium as specified in claims 1 to 9.

Accordingly, a second aspect of the present invention provides an apparatus as specified in claim 10.

Accordingly, a third aspect of the present invention provides a method as specified in claim 11.

According to the present invention, information on a contract of a fixed price print service can be easily confirmed before printing.

Further features of the present invention will become apparent from the following description of exemplary embodiments with reference to the attached drawings.

### BRIEF DESCRIPTION OF THE DRAWINGS

FIG. 1 is a view schematically showing a configuration of a printing system including a computer as an information processing apparatus according to an embodiment.
FIG. 2A, FIG. 2B, and FIG. 2C are block diagrams respectively showing hardware configurations of a computer, a subscription service server, and a printer that constitute the printing system.
FIG. 3 is a block diagram showing a configuration of printing-related software of the computer.
FIG. 4 is a flowchart showing a procedure of a display control process performed by a printer driver in FIG. 3.
FIG. 5 is a view showing an example of a print setting UI displayed on a display unit in FIG. 2A.
FIG. 6 is a flowchart showing a procedure of a subscription service tab display control process in S402 in FIG. 4.
FIG. 7A and FIG. 7B are views showing examples of subscription service management information and server access information obtained in S604 in FIG. 6.
FIG. 8A and FIG. 8B are views showing examples of print setting UIs displayed on the display unit in FIG. 2A.
FIG. 9A and FIG. 9B are views showing examples of the print setting UIs displayed in S612, S613, and S614 in FIG. 6.
FIG. 10 is a flowchart showing another procedure of the subscription service tab display control process in S402 in FIG. 4.

### DESCRIPTION OF THE EMBODIMENTS

Hereafter, embodiments according to the present invention will be described in detail by referring to the drawings.

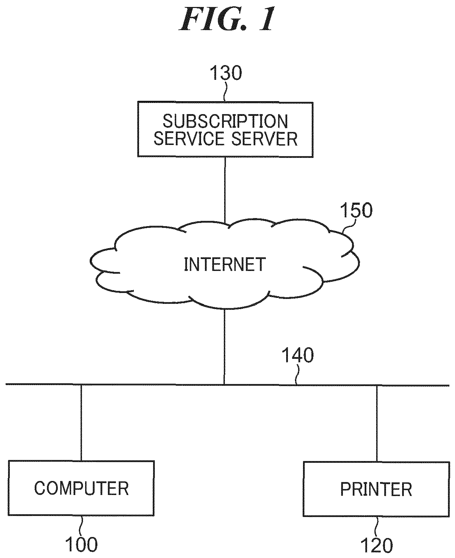

FIG. 1 is a view schematically showing a configuration of a printing system including a computer 100 as an information processing apparatus according to an embodiment. The printing system includes a subscription service server 130, the computer 100, and a printer 120. The computer 100 and the printer 120 are communicably connected to each other via a local network 140. The local network 140 is connected to the Internet 150 via a router (not shown). The local network 140 is, for example, a LAN, but may be connected by wire or wirelessly.

The subscription service server 130 provides a printer subscription service. For example, the subscription service server 130 provides a fixed price print service. In the fixed price print service, the printer can be used at a fixed price regardless of the number of print sheets during a contract period as long as the printed sheet number is within the number of print sheets corresponding to a contracted plan. In the fixed price print service, a plan including a delivery service of toner and ink as consumables is provided in addition to the print service within the printed sheet number.

The subscription service server 130 is managed by a subscription service provider and is connected to the Internet 150. Thus, the subscription service server 130 is communicably connected to the computer 100 and the printer 120 via the Internet 150 and the local network 140. In this embodiment, a subscription service contract regarding the use of the printer 120 shall be made between the user of the printer 120 and the subscription service provider of the printer.

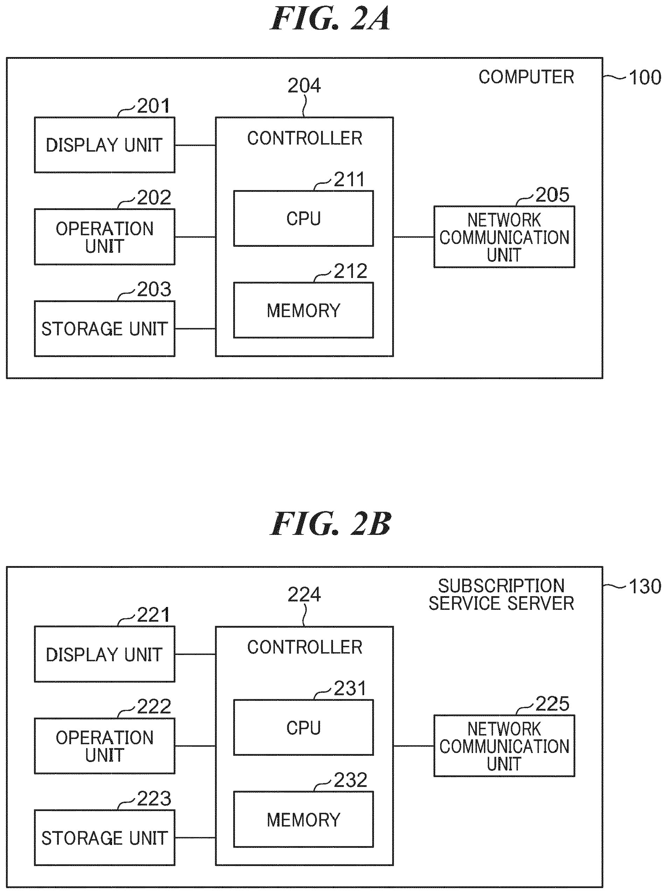

FIG. 2A is a block diagram showing a hardware configuration of the computer 100. The computer 100 includes a display unit 201, an operation unit 202, a storage unit 203, a controller 204, and a network communication unit 205. The controller 204 includes a CPU 211 and a memory 212.

The display unit 201 is a display device, such as a liquid crystal display (LCD). The operation unit 202 includes input devices, such as a mouse and a keyboard, that receive operations by a user. The storage unit 203 is a storage medium, such as an HDD or an SSD, that stores various kinds of software necessary for the operation of the computer 100.

The controller 204 totally controls the computer 100 by the CPU 211 executing predetermined programs stored in the memory 212 and the storage unit 203. The controller 204 executes various processes described below by the CPU 211 developing predetermined software programs stored in the storage unit 203 onto the memory 212 and running them. The network communication unit 205 is connected to an external network, such as the Internet 150, via the local network 140 to exchange data with an external apparatus.

FIG. 2B is a block diagram showing a hardware configuration of the subscription service server 130. The subscription service server 130 includes a display unit 221, an operation unit 222, a storage unit 223, a controller 224, and a network communication unit 225. The controller 224 includes a CPU 231 and a memory 232.

The subscription service server 130 and the computer 100 are different in the programs (processes) to be executed, but are substantially the same in the hardware configuration. Therefore, the hardware configuration of the subscription service server 130 is similar to the hardware configuration of the computer 100, and a description thereof will be omitted.

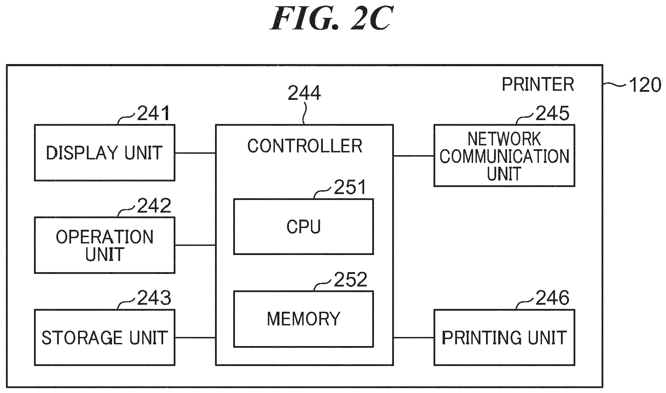

FIG. 2C is a block diagram showing a hardware configuration of the printer 120. The printer 120 includes a display unit 241, an operation unit 242, a storage unit 243, a controller 244, a network communication unit 245, and a printing unit 246. The controller 244 includes a CPU 251 and a memory 252.

The display unit 241 is a display device, such as an LCD. The operation unit 242 is an input unit including a touch panel, buttons, and switches that receive operations by a user. The touch panel is overlappingly arranged on a display panel of the display device. Touch panel and the display device cooperate to function as the operation unit that receives a user operation. The storage unit 243 is a storage medium, such as an HDD or an SSD, that stores various kinds of software necessary for the operation of the printer 120.

The controller 244 totally controls the printer 120 by the CPU251 executing predetermined programs stored in the memory 252 and the storage unit 243. The controller 244 executes various processes described below by the CPU 251 developing predetermined software programs stored in the storage unit 243 onto the memory 252 and running them.

The network communication unit 245 is connected to an external network, such as the Internet 150, via the local network 140 and exchanges data with an external apparatus. The printing unit 246 converts digital data stored in the storage unit 243 or the memory 252 into an image and prints the image on a recording sheet according to an instruction from the controller 244. The printing method is not limited, and for example, an inkjet method or an electrophotographic method is employed.

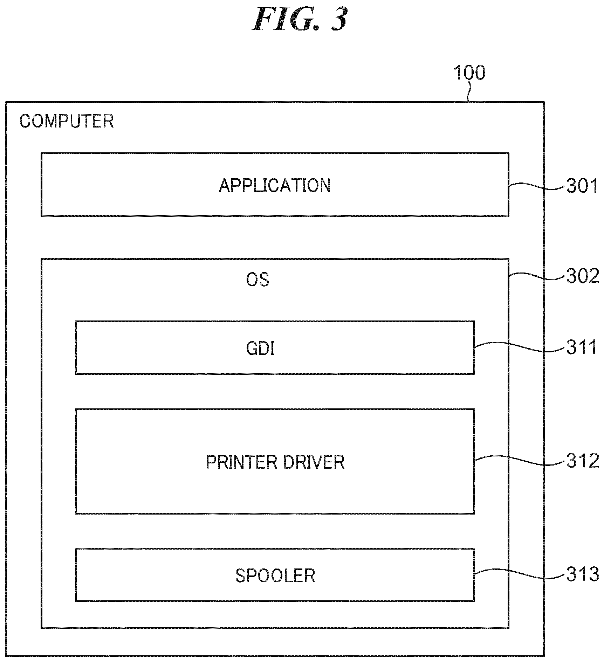

FIG. 3 is a block diagram showing a configuration of printing-related software of the computer 100. The printing-related software includes an application 301 and an OS (Operating System) 302. The OS 302 includes a GDI (Graphic Device Interface) 311, a printer driver 312, and a spooler 313. The application 301 is arbitrary software, such as document creation software, spreadsheet software, or image editing software, that has a printing function.

The user can print information displayed on the display unit 201 of the computer 100 by the printer 120 by executing the printing function included in the application 301. The print function of the application 301 is achieved by calling an interface of the GDI 311.

The OS 302 is software that controls basic operations of the computer 100. The application 301 and the printer driver 312 are managed by the OS 302, and are available when they are installed to the OS 302. The GDI 311 is a component that provides an interface related to drawing, such as printing, to an external apparatus.

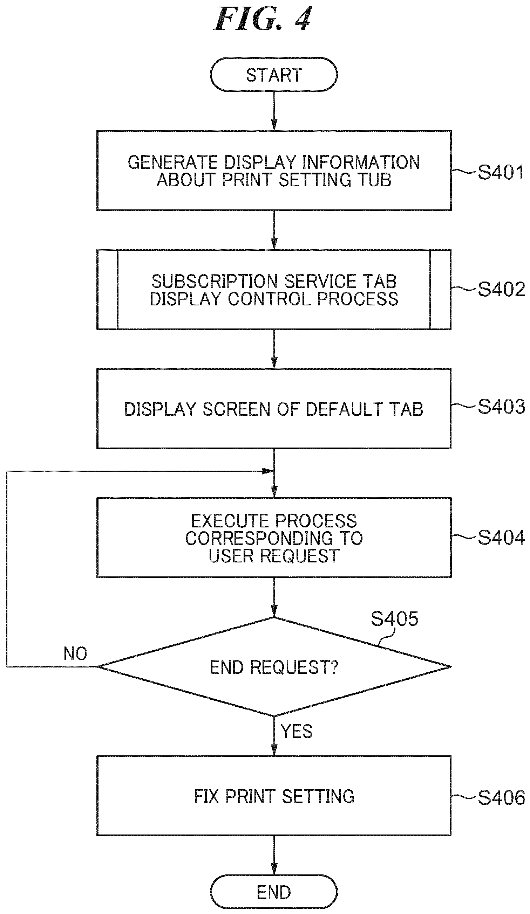

The printer driver 312 generates drawing data (PDL) that can be interpreted by the printer 120 at the time of printing. The printer driver 312 executes a display control process in FIG. 4 to display a print setting UI for causing the printer 120 to execute printing on the display unit 201. The print setting UI is configured by a plurality of tabs for switching screens, and a screen corresponding to a selected tab is displayed in the print setting UI. The spooler 313 transmits the PDL generated by the printer driver 312 to the printer 120.

FIG. 4 is a flowchart showing a procedure of the display control process performed by the printer driver 312 in FIG. 3. The display control process in FIG. 4 is achieved by the CPU 211 of the computer 100 reading the control program of the printer driver 312 stored in the storage unit 203 to the memory 212 and executing the read control program. The display control process in FIG. 4 is executed when the printer driver 312 receives a display request of the print setting UI of the printer 120 transmitted from the application 301 via the GDI 311.

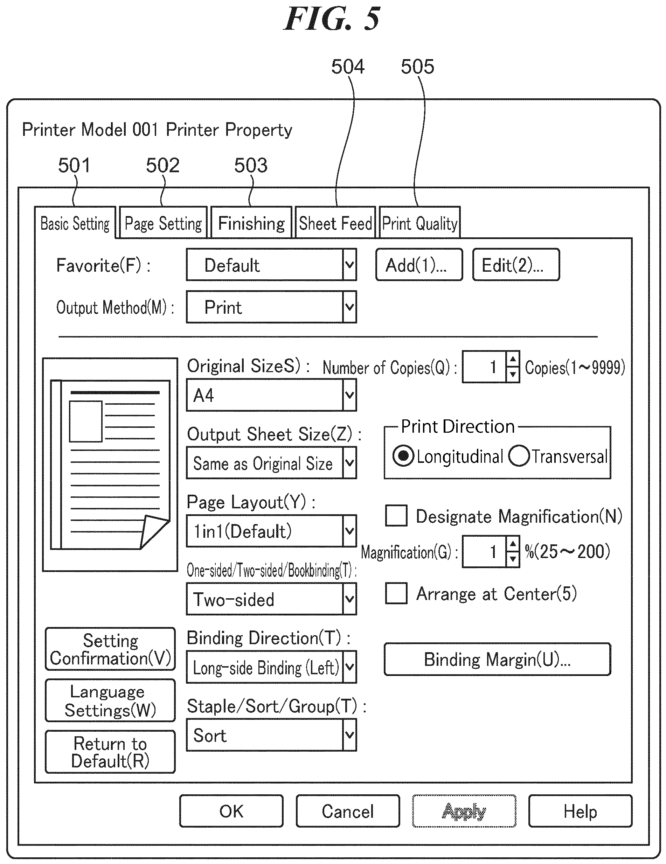

In FIG. 4, the CPU 211 generates display information about a print setting tab for switching a print setting screen as an initialization process (S (step) 401). The display information about the print setting tab is displayed on the screen corresponding to the selected print setting tab. In FIG. 5, as an example, a print setting UI including five print setting tabs, such as a basic setting tab 501, a page setting tab 502, a finishing tab 503, a sheet feed tab 504, and a print quality tab 505, and a display example in selecting the basic setting tab 501 are shown.

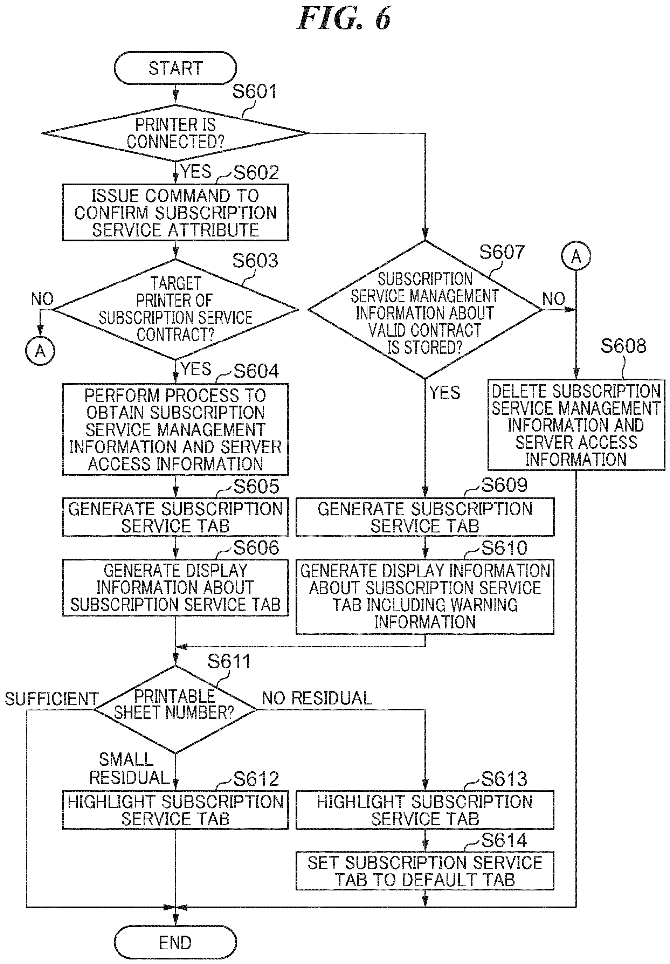

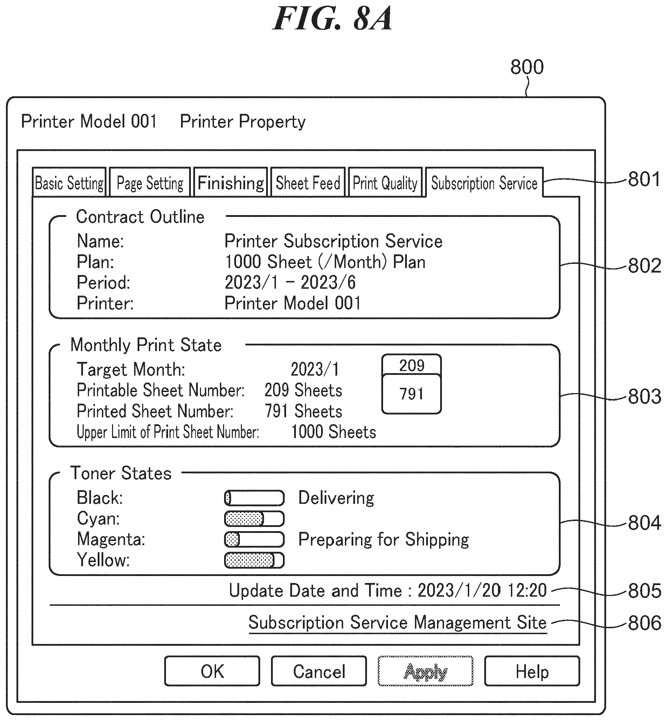

Next, the CPU 211 performs a subscription service tab display control process (S402) in FIG. 6 described below to generate the display information about the subscription service tab in a case where the printer 120 is a target printer of the subscription service contract. Next, the CPU 211 causes the display unit 201 to display a screen of a tab set as a default tab (S403). For example, when the printer 120 is a target printer of the subscription service contract, a print setting UI 800 of the printer 120 shown in FIG. 8A described below is displayed on the display unit 201. The print setting UI 800 includes a subscription service tab 801 (an object) described later in addition to the basic setting tab 501, page setting tab 502, finishing tab 503, sheet feed tab 504, and print quality tab 505, which are the print setting tabs.

Next, when receiving a user request, such as a setting change request or a tab switching request, from the user via the print setting UI of the printer 120, the CPU 211 performs a process corresponding to the received user request (S404).

Next, the CPU 211 determines whether an end request for closing the print setting UI is received (S405). When it is determined in S405 that the end request is not received, the display control process returns to S404. When it is determined that the end request is received in S405, the display control process proceeds to S406.

In S406, when the user selects an OK button, the CPU 211 fixes the print settings set on each screen of the print setting UI. The CPU 211 returns the fixed print settings to the application 301 via the GDI 311 and finishes the process.

FIG. 6 is a flowchart showing a procedure of the subscription service tab display control process in S402 in FIG. 4.

As shown in FIG. 6, the CPU 211 determines whether the printer 120 is connected on the basis of status information about the printer 120 provided by the OS 302 (S601). When it is determined that the printer 120 is connected in S601, the subscription service tab display control process proceeds to S602.

In S602, the CPU 211 issues a command to the printer 120 to confirm a subscription service attribute. Next, the CPU 211 determines whether the printer 120 is a target printer of the subscription service contract on the basis of a response to the command (S603). When it is determined in S603 that the printer 120 is the target printer of the subscription service contract, the subscription service tab display control process proceeds to S604.

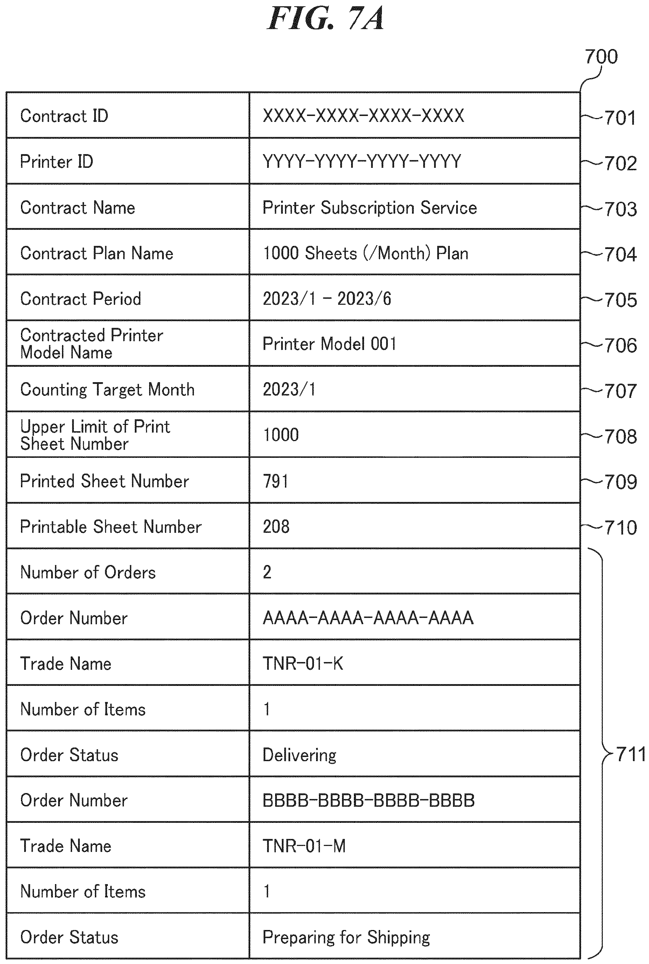

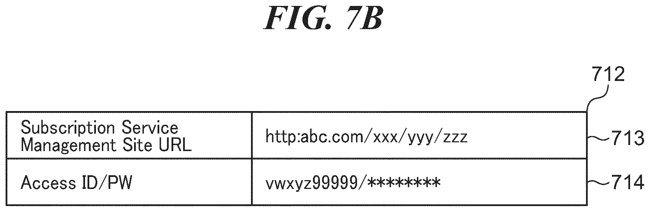

In S604, the CPU 211 performs the process of obtaining subscription service management information 700 in FIG. 7A and server access information 712 in FIG. 7B. Specifically, the CPU 211 issues a command for obtaining the subscription service management information 700 and the server access information 712 to the printer 120, and obtains the subscription service management information 700 and the server access information 712 from the printer 120.

The CPU 211 also stores the obtained subscription service management information 700 and server access information 712 in the storage unit 203. The CPU 211 also records date and time information in obtaining the subscription service management information 700. Hereinafter, the configurations of the subscription service management information 700 and the server access information 712 will be described.

As shown in FIG. 7A, the subscription service management information 700 records information related to the subscription service contract, such as the content of the subscription service contract, the number of print sheets subjected to the subscription service contract, and information about toner and ink. The subscription service management information 700 includes a subscription ID 701, a printer ID 702, a contract name 703, a contract plan name 704, a contract period 705, a contracted printer model name 706, a counting target month 707, the upper limit of print sheet number 708, and the printed sheet number 709. The subscription service management information 700 further includes the printable sheet number 710 and order information 711.

The contract ID 701 is information for identifying the contract content of the fixed price print service contracted by the user of the printer 120. The printer ID 702 is information for specifying the printer 120 subjected to the contract. The contract name 703 indicates the name of the fixed price print service contracted by the user of the printer 120.

The contract plan name 704 indicates a plan of the fixed price print service contracted by the user of the printer 120. The contract period 705 indicates a contract period of the fixed price print service contracted by the user of the printer 120. The contracted printer model name 706 indicates the model name of the printer subjected to the contract. The counting target month 707 indicates the current month. The upper limit number of print sheets 708 indicates the upper limit number of sheets to be printable during a fixed price period of the fixed price print service contracted by the user of the printer 120. The printed sheet number 709 indicates a cumulative value of the printed sheet number during the fixed price period.

The printable sheet number 710 indicates the number of remaining printable sheets during the fixed price period. In this embodiment, each time the printer 120 performs printing, the printed sheet number 709 is incremented and the printable sheet number 710 is decremented. The order information 711 is order information about toner or ink.

The configuration of the subscription service management information 700 shown in FIG. 7A is an example. The subscription service management information 700 may not include all of the above-described pieces of information. For example, the subscription service management information 700 of a subscription service contract in which the upper limit number of print sheets is not set may not include the upper limit number of print sheets 708. The order information 711 may not be included in the subscription service management information 700 of the subscription service contract that does not include the delivery service of toner or ink.

As shown in FIG. 7B, information for accessing a subscription service management site managed by the subscription service server 130 is recorded in the server access information 712. The server access information 712 includes pieces of information, such as a subscription service management site URL 713 that is a URL of the subscription service management site and an access ID/PW 714 for a user to access the subscription service management site.

Returning to FIG. 6, when completing the process in S604, the CPU 211 generates a subscription service tab to switch to a screen displaying information related to the subscription service contract (S605). Then, the CPU 211 generates display information about the subscription service tab (S606). The display information about the subscription service tab is information displayed on a screen corresponding to the selected subscription service tab. Since the display information about the subscription service tab is generated in advance in this way, when the user requests to switch to the screen corresponding to the subscription service tab in S404 described above, the screen can be displayed immediately.

FIG. 8A is a view showing an example of a print setting UI 800 configured with tabs including the subscription service tab. FIG. 8A shows a display example in a case where the subscription service tab 801 is selected.

On the screen corresponding to the subscription service tab 801, pieces of information relating to the contract of the fixed price print service, specifically, pieces of information included in the subscription service management information 700 are displayed in a contract outline 802, a monthly print state 803, and toner states 804. For example, a contract name 703, a contract plan name 704, a contract period 705, and a contracted printer model name 706 in the subscription service management information 700 are displayed in the contract outline 802.

In the monthly print state 803, a counting target month 707, the upper limit number of print sheets 708, the printed sheet number 709, and the printable sheet number 710 included in the subscription service management information 700 are displayed. The user can easily know the number of remaining printable sheets by checking the contents of the monthly print state 803, and thus can know automatic change of the contract plan and occurrence of an excess fee in advance. In the toner states 804, the pieces of order information 711 in the subscription service management information 700 are displayed.

FIG. 8A shows an example in which the remaining amounts of respective toners obtained from the printer 120 are displayed together with delivery statuses of the toners. Since the remaining amounts of the toners and the delivery statuses of the toners are displayed together in this way, the user can check the remaining amounts and the delivery statuses of the toners at the same time, which improves the convenience of the user.

In addition, an update date and time 805 and a subscription service management site link 806 are displayed on the screen corresponding to the subscription service tab 801. The update date and time 805 is date and time information at which the CPU 211 obtains the subscription service management information 700 in S604. The user can know the date and time at which the information displayed on the screen corresponding to the subscription service tab 801 is updated by checking the update date and time 805.

The subscription service management site URL 713 of the server access information 712 is linked to the subscription service management site link 806. When the user clicks the subscription service management site link 806, a web browser is activated on the computer 100 to direct the user to the subscription service management site for various procedures, such as contract renewal, plan change, and orders of toner and ink.

Returning to FIG. 6, upon completion of the process in S606, the subscription service tab display control process proceeds to S611 described below.

When it is determined in S601 that the printer 120 is not connected, the CPU 211 determines whether the subscription service management information related to the valid contract is stored in the storage unit 203 (S607). For example, when the subscription service management information 700 of which the counting target month 707 falls within the contract period 705 is not stored in the storage unit 203, it is determined that the subscription service management information related to the valid contract is not stored in the storage unit 203. In this case, the subscription service tab display control process proceeds to S608 described below. Also, when it is determined in S603 that the printer 120 is not the target printer of the subscription service contract, the subscription service tab display control process proceeds to S608.

In S608, the CPU 211 deletes the subscription service management information 700 and the server access information 712 from the storage unit 203 if they are stored in the storage unit 203. Thereafter, the CPU 211 ends the subscription service tab display control process without generating the subscription service tab. As described above, in this embodiment, when the subscription service contract is not valid, the print setting UI that does not include the subscription service tab is displayed on the display unit 201. That is, the same printer driver 312 can be used when a print instruction is issued to either the target printer or the non-target printer of the subscription service contract. Therefore, the user does not need to re-download the printer driver 312 based on whether the user makes the subscription service contract.

In the meantime, when the subscription service management information 700 of which the counting target month 707 falls within the contract period 705 is stored in the storage unit 203, it is determined in S607 that the subscription service management information related to the valid contract is stored in the storage unit 203. In this case, the subscription service tab display control process proceeds to S609.

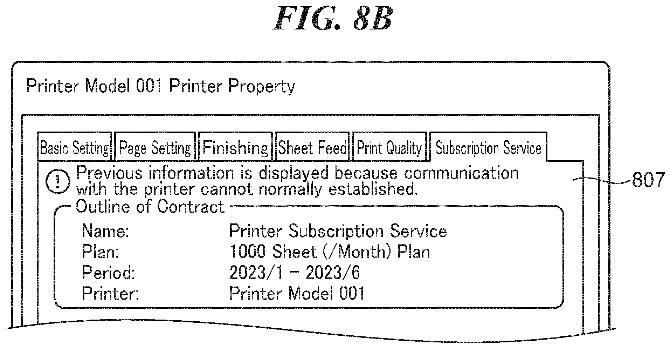

In S609, the CPU 211 generates a subscription service tab. Then, the CPU 211 generates display information about the subscription service tab (S610). Note that, since there is a possibility that the display information about the subscription service tab is old information because it is determined in S601 that the printer 120 is not connected, the display information about the subscription service tab including warning information is generated in S610. The warning information is for displaying a message, such as a message 807 in FIG. 8B, indicating that the displayed information may be old information because communication with the printer 120 cannot be performed normally. Thereafter, the subscription service tab display control process proceeds to S611.

In S611, the CPU 211 checks the printable sheet number 710 in the subscription service management information 700. When the printable sheet number 710 is equal to or more than a first threshold, it is determined that the printable sheet number is "sufficient". The first threshold is a predetermined percentage, for example, 10% of the upper limit of print sheet number 708. When it is determined that the printable sheet number is "sufficient", the subscription service tab display control process ends.

When the printable sheet number 710 is less than the first threshold, it is determined that the printable sheet number is "small residual". When it is determined that the printable sheet number is "small residual", the CPU 211 highlights the subscription service tab (S612).

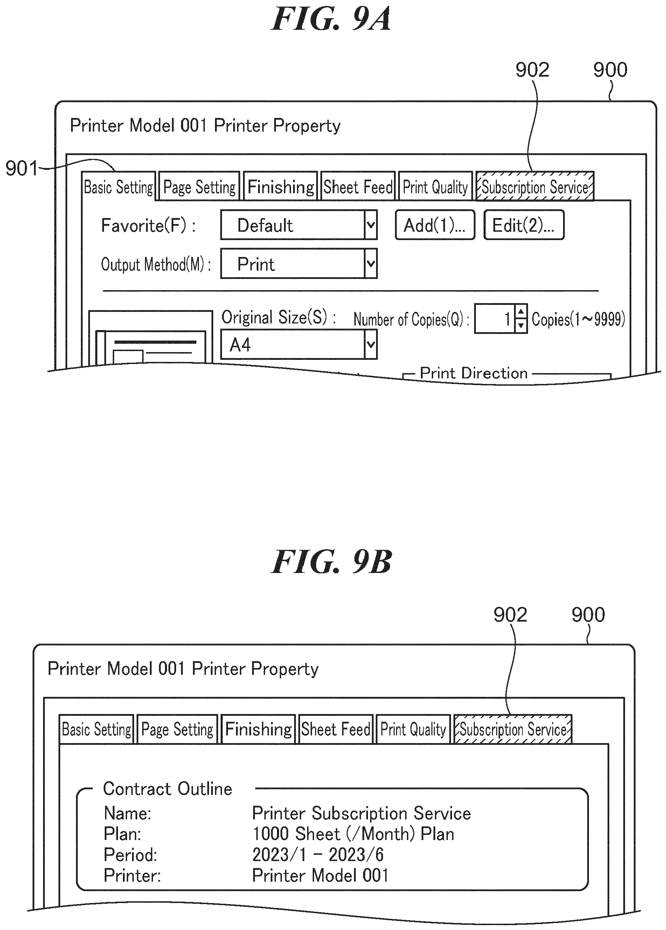

FIG. 9A is a display example when a basic setting tab 901 is selected in a print setting UI 900. In S612, the CPU 211 displays a background color of a subscription service tab 902 in a color different from a background color in a normal non-selection state as shown in FIG. 9A. Alternatively, the CPU 211 changes the font and the thickness of the characters of the subscription service tab 902 from those in the normal non-selection state. The user can know that there is a content to be checked by selecting the subscription service tab because the subscription service tab is highlighted in this way when the printable sheet number is "small residual". When the process in S612 is completed, the subscription service tab display control process is terminated.

When the printable sheet number 710 is equal to or less than a second threshold smaller than the first threshold, it is determined that the printable sheet number is "no residual (zero)". The second threshold is a predetermined value close to zero. When it is determined that the printable sheet number is "no residual (zero)", the CPU 211 highlights the subscription service tab (S613).

The CPU 211 also sets the subscription service tab to the default tab (S614). Accordingly, when the print setting UI is opened, the subscription service tab 902 is highlighted and a screen corresponding to the subscription service tab 902 is displayed as shown in FIG. 9B. Such control can notify the user that the printable sheet number is "no residual (zero)" when the user opens the print setting UI. When the process in S614 is completed, the subscription service tab display control process is terminated.

According to the above-described embodiment, when it is determined that the printer 120 is the target printer of the subscription service contract, the print setting UI 800 including the subscription service tab 801 for displaying information related to the contract of the fixed price print service is displayed on the display unit 201. Thus, the user can confirm the information related to the contract of the fixed price print service only by selecting the subscription service tab 801 displayed in the print setting UI 800, and thus can easily confirm the information related to the contract of the fixed price print service before printing.

In the above-described embodiment, the computer 100 obtains the subscription service management information 700 including the information related to the contract of the fixed price print service from the printer 120. Thus, the user can easily confirm the information related to the contract of the fixed price print service before printing under the configuration in which the information related to the contract of the fixed price print service is managed by the printer 120.

In the above-described embodiment, when it is determined that the printer 120 is not connected, the information indicating that the information related to the contract of the fixed price print service may be old information is displayed on the display unit 201. This can prevent the user from accepting old information related to the contract of the fixed price print service displayed on the display unit 201 without having a doubt. Accordingly, the user can avoid an unintended automatic change of a plan and an occurrence of an excessive charge.

In the above-described embodiment, the information related to the contract of the fixed price print service includes the information of the remaining printable sheet number based on the contract of the fixed price print service. This allows the user to confirm the remaining printable sheet number before printing.

Although the present invention has been described using the above-described embodiments, the present invention is not limited to the above-described embodiments. For example, the computer 100 may obtain the subscription service management information 700 from the subscription service server 130. In such a configuration, the process in S402 is different from the subscription service tab display control process in FIG. 6 described above. Hereinafter, the process in S402 under the configuration in which the computer 100 obtains the subscription service management information 700 from the subscription service server 130 will be described.

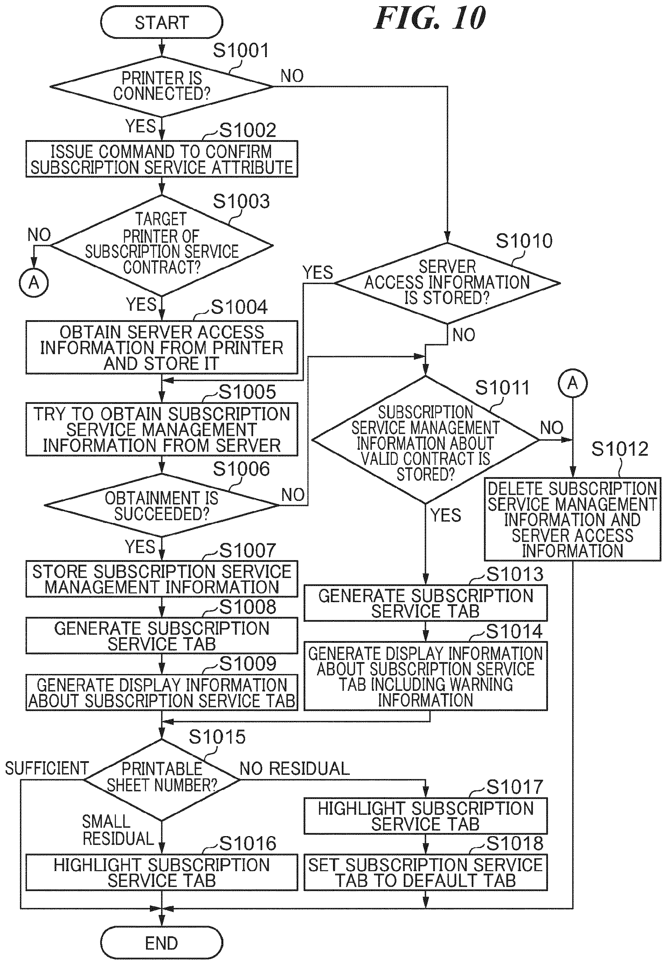

FIG. 10 is a flowchart showing another subscription service tab display control process in S402 in FIG. 4. The subscription service tab display control process in FIG. 10 is similar to that in FIG. 6 described above, and the following description will be given to contents different from those of the subscription service tab display control process in FIG. 6. The subscription service tab display control process in FIG. 10 is also achieved by the CPU 211 of the computer 100 reading a control program of the printer driver 312 stored in the storage unit 203 to the memory 212 and executing the read control program.

In FIG. 10, the CPU 211 determines whether the printer 120 is connected (S1001) as in S601 described above. When it is determined in S1001 that the printer 120 is connected, the subscription service tab display control process proceeds to S1002, which is the same process as S602 described above, and then proceeds to S1003, which is the same process as S603 described above.

When it is determined in S1003 that the printer 120 is not a target printer of the subscription service contract, the subscription service tab display control process proceeds to S1012 described below, which is the same process as the above-described S608. When it is determined in S1003 that the printer 120 is the target printer of the subscription service contract, the subscription service tab display control process proceeds to S1004.

In S1004, the CPU 211 issues a command for obtaining the server access information 712 to the printer 120, obtains the server access information 712 from the printer 120, and stores the obtained server access information 712 in the storage unit 203. Next, the CPU 211 accesses the subscription service server 130 using the server access information 712 and tries to obtain the subscription service management information 700 from the subscription service server 130 (S1005). Next, the CPU 211 determines whether the obtainment of the subscription service management information 700 has succeeded (S1006).

When it is determined in S1006 that the obtainment of the subscription service management information 700 is successful, the CPU 211 stores the obtained subscription service management information 700 in the storage unit 203 (S1007). Next, the CPU 211 generates a subscription service tab (S1008) in the same manner as S605 described above, and generates display information about the subscription service tab (S1009) in the same manner as S606 described above. Next, the processes in S1015 to S1018, which are the same processes as the above-described S611 to S614, are performed, and the subscription service tab display control process is terminated.

When it is determined in S1001 that the printer 120 is not connected, the CPU 211 determines whether the server access information 712 is stored in the storage unit 203 (S1010). When it is determined in S1010 that the server access information 712 is stored in the storage unit 203, the subscription service tab display control process proceeds to S1005 described above.

When it is determined in S1010 that the server access information 712 is not stored in the storage unit 203, the subscription service tab display control process proceeds to S1011, which is the same process as S607 described above. Also, when it is determined in S1006 that the obtainment of the subscription service management information 700 is not succeeded, the subscription service tab display control process proceeds to S1011.

When it is determined in S1011 that the subscription service management information related to the valid contract is not stored, the subscription service tab display control process proceeds to S1012, which is the process similar to S608 described above, and then the subscription service tab display control process ends.

When it is determined in S1011 that the subscription service management information related to the valid contract is stored, the CPU 211 generates the subscription service tab (S1013) similarly to S609 described above, and generates the display information about the subscription service tab (S1014) similarly to S610 described above. Since the determination in S1011 is executed when it is determined in S1001 that the printer 120 is not connected or when it is determined in S1006 that the obtainment of the subscription service management information is not succeeded, the display information about the subscription service tab subjected to the determination in S1011 may be old information. Thus, the display information about the subscription service tab including warning information is generated in S1010.

For example, when it is determined in S1001 that the printer 120 is not connected, the warning information for displaying a message indicating that the displayed information may be old information because the communication with the printer 120 cannot be normally performed is generated. When it is determined in S1006 that the obtainment of the management information is not succeeded, the warning information for displaying a message indicating that the displayed information may be old information because the communication with the subscription service server 130 cannot be normally performed is generated. Next, the processes in S1015 to S1018, which are the same processes as the above-described S611 to S614, are performed, and the subscription service tab display control process is terminated.

Even under the configuration in which the computer 100 obtains the subscription service management information 700 from the subscription service server 130, the same effect as that of the above-described embodiment can be achieved.

In the above-described embodiment, when it is determined that the obtainment of the subscription service management information 700 is not succeeded, the information indicating that the information related to the contract of the fixed price print service may be old information is displayed on the display unit 201. This can prevent the user from accepting old information related to the contract of the fixed price print service displayed on the display unit 201 without having a doubt under the configuration in which the computer 100 obtains the subscription service management information 700 from the subscription service server 130. Accordingly, the user can avoid an unintended automatic change of a plan and an occurrence of an excessive charge.

Although the configuration in which the server access information 712 is obtained from the printer 120 has been described in this embodiment, this configuration is not limiting. For example, the user may be prompted to input information for accessing the subscription service management site, or the server access information 712 may be obtained directly or indirectly from other client software on the computer 100.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A non-transitory computer-readable storage medium storing a printer driver (312), the printer driver comprising:
a code for displaying a print setting screen (800) for receiving a print setting for printing by a printer (120) on a display unit(201) of an information processing apparatus (100) in which the printer driver is installed; and
a code for displaying information related to a fixed price print service with the printer (120) on the display unit (201).

2. The non-transitory computer-readable storage medium according to claim 1, wherein the printer driver further comprises a code for causing the information processing apparatus (100) to obtain information relating to the fixed price print service from the printer (120).

3. The non-transitory computer-readable storage medium according to claim 2, wherein the printer driver (312) further comprises:
a code for causing the information processing apparatus (100) to determine whether the information processing apparatus is connected to the printer (120); and
a code for displaying information indicating that the information related to the fixed price print service is old information on the display unit (201) in determining that the information processing apparatus (100) is not connected to the printer (120).

4. The non-transitory computer-readable storage medium according to claim 1, wherein the printer driver (312) further comprises a code for causing the information processing apparatus (100) to obtain information related to the fixed price print service from a server (130) that manages the fixed price print service.

5. The non-transitory computer-readable storage medium according to claim 4, wherein the printer driver (312) further comprises:
a code for causing the information processing apparatus (100) to determine whether obtainment of the information relating to the fixed price print service is succeeded; and
a code for displaying information indicating that the information related to the fixed price print service may be old information on the display unit (201) in determining that the obtainment of the information related to the fixed price print service is not succeeded.

6. The non-transitory computer-readable storage medium according to any one of claims 1 to 5, wherein the information related to the fixed price print service is not displayed on the display unit (201) in a case where use of the printer (120) is not restricted.

7. The non-transitory computer-readable storage medium according to any one of claims 1 to 6, wherein the information related to the fixed price print service includes information related to a remaining printable sheet number based on a contract of the fixed price print service.

8. The non-transitory computer-readable storage medium according to claim 7, wherein an object (801) for indicating information related to the fixed price print service with the printer (120) is displayed on the print setting screen (800).

9. The non-transitory computer-readable storage medium according to claim 8, wherein the printer driver further comprises a code for highlighting the object (801) in a case where the remaining printable sheet number based on the contract of the fixed price print service is smaller than a predetermined threshold.

10. An information processing apparatus (100) comprising:
a first display function configured to cause a printer driver (312) to display a print setting screen (800) for receiving a print setting for printing by a printer (120); and
a second display function configured to cause the printer driver (312) to display information related to a fixed price print service with the printer (120).

11. A control method for an information processing apparatus (100), the control method comprising:
a step of causing a printer driver (312) to display a print setting screen (800) for receiving a print setting for printing by a printer (120) on a display unit (201) of the information processing apparatus (100); and
a step of causing the printer driver (312) to display information related to a fixed price print service with the printer (120) on the display unit (201) of the information processing apparatus (100).
